# DEMANDE DE BREVET EUROPEEN

(11) **EP 2 323 175 A1**
(43) Date de publication de la demande: **18.05.2011**
(21) Numéro de dépôt: 10191237.6
(22) Date de dépôt: 15.11.2010
(51) Int. Cl.: H01L 31/048

(54) **Profilés de maintien mécanique et recouvrement des modules**

(30) Priorité: 16.11.2009 FR 0958043
(71) Demandeur: Photowatt International, 38300 Bourgoin Jallieu (FR)
(72) Inventeur: Allandrieu, Frantz, 01800 Saint Maurice de Gourdans (FR); Franchon, Patrick, 38110 Dolomieu (FR); Dumas, Philippe, 38890 Saint Chef (FR)
(74) Mandataire: Maureau, Philippe

(57) **Abrégé**

La présente invention a pour objet un module photovoltaïque (1) destiné à l'intégration en toiture comprenant un laminé (2) avec une bordure haute (4), une bordure basse (5), caractérisé en ce que la bordure haute (4) comprend une première traverse (10) et la bordure basse (5) comprend une seconde traverse (20) de forme adaptée à celle de la première traverse (10) de manière à ce que la première (10) et la seconde traverse (20) respectivement de la bordure haute (4) et basse (5) de deux modules photovoltaïques (1) adjacents disposés l'un au dessus de l'autre bloquent en translation le mouvement d'un de ces modules photovoltaïques (1) par rapport à l'autre selon une direction sensiblement transversale au plan du toit.

## Description

La présente invention a pour objet un module photovoltaïque ainsi que son procédé de montage parmi d'autres même modules photovoltaïques.

Il est connu de réaliser des installations de modules photovoltaïques sur les toitures de bâtiments industriels et d'immeubles d'habitation.

L'installation de ces modules peut cependant se révéler compliquée car dépendante de la configuration particulière de chaque toiture.

Actuellement les modules sont livrés sous forme de laminé intégrant des composants sensibles photovoltaïques de faible épaisseur, telles que des cellules cristallines ou bien des cellules réalisées par dépôt en couche mince, puis adaptés aux toitures et installés à l'aide de pièces mécaniques additionnelles, tels des crochets, agrafes, clips, vis, constituant une structure solide apte à maintenir en position l'ensemble des modules photovoltaïques de l'installation.

Le document DE 92 18 903 U1 divulgue un tel exemple d'installation de module photovoltaïque destiné à l'intégration en toiture dans laquelle une tuile supporte un laminé photovoltaïque, dont le bord inférieur est maintenu sur la tuile à l'aide d'un crochet destiné à pénétrer dans une encoche dédiée ménagée sur la tuile et dont le bord supérieur est maintenu par le bord d'une tuile supérieure adjacente.

Cependant, un tel dispositif n'assure pas d'une part à lui seul le maintien du laminé du module, ce qui nécessite encore des pièces additionnelles pour le maintien des modules disposés dans les positions les plus élevées sur le toit, et d'autre part les tuiles constituant la toiture et soutenant les différents laminés sont soumises aux mêmes risques de soulèvement que ceux des tuiles classiques, notamment par vents violents.

De plus, ces pièces mécaniques peuvent être variées et de différentes tailles. En outre, leur utilisation rallonge considérablement le nombre d'étapes nécessaires à la réalisation d'une installation photovoltaïque sur toiture et peut nécessiter la mise en place de joints d'étanchéité pour prévenir les infiltrations d'eau.

Enfin, selon leur emplacement sur le module ces pièces mécaniques peuvent être difficiles à installer, notamment lorsqu'elles sont entièrement recouvertes lors de l'installation des modules photovoltaïques sur le toit.

La présente invention a pour but de résoudre tout ou partie des inconvénients mentionnés ci-dessus en fournissant un module photovoltaïque destiné à l'intégration en toiture, prêt au montage, simple à installer et résistant au soulèvement par vents violents.

A cet effet, la présente invention a pour objet un module photovoltaïque destiné à l'intégration en toiture comprenant un laminé avec une bordure haute, une bordure basse, caractérisé en ce que la bordure haute comprend une première traverse et la bordure basse comprend une seconde traverse de forme adaptée à celle de la première traverse de manière à ce que la première et la seconde traverse respectivement de la bordure haute et basse de deux modules photovoltaïques adjacents disposés l'un au dessus de l'autre bloquent en translation le mouvement d'un de ces modules photovoltaïques par rapport à l'autre selon une direction sensiblement transversale au plan du toit.

Cette disposition permet de s'affranchir de pièces mécaniques additionnelles de maintien des modules photovoltaïques entre eux. Et en particulier, elle empêche un soulèvement vertical pouvant parfois survenir lors de vents violents dans des installations traditionnelles. Cela induit donc une grande facilité de montage avec une sécurisation optimale et un gain de temps important dans l'installation.

Selon un mode de réalisation, le laminé et/ou la seconde traverse de la bordure basse d'un premier module photovoltaïque disposé au dessus d'un second module photovoltaïque adjacent au premier, recouvre partiellement le laminé et/ou la première traverse de la bordure haute du second module photovoltaïque.

Cette disposition permet de s'affranchir de joints pour garantir l'étanchéité de l'installation. L'écoulement des eaux de pluie est possible d'un module supérieur vers un module inférieur sans risque d'infiltration à l'interface entre les deux modules. De plus cette disposition limite l'utilisation de parties de jonction et augmente la surface vitrée d'un assemblage de modules.

Selon un mode de réalisation, la forme de la seconde traverse de la bordure basse est agencée pour être emboîtée avec la première traverse d'une bordure haute.

Selon le même mode de réalisation, l'emboîtement entre deux modules nécessite un mouvement de rotation.

Cette disposition permet d'assurer le blocage selon une direction sensiblement transversale au plan du toit entre deux modules photovoltaïques disposés l'un au dessus de l'autre sans avoir recours à des moyens de fixation additionnels.

Selon un mode de réalisation, la traverse de la bordure haute d'un premier module photovoltaïque comporte au moins une encoche et la traverse de la bordure basse de ce même premier module photovoltaïque comporte au moins une partie en saillie, ces parties en saillie étant destinées à pénétrer au moins partiellement au travers des encoches de la traverse de la bordure haute d'un second module photovoltaïque adjacent disposé en dessous du premier module photovoltaïque.

Cette disposition permet de créer la liaison mécanique nécessaire entre deux modules photovoltaïques adjacents disposés l'un au dessus de l'autre par simple usinage des traverses de la partie haute et de la partie basse et sans nécessité de pièce mécanique de fixation supplémentaire.

Selon le même mode de réalisation, l'au moins une partie en saillie de la traverse de la bordure basse forme un « L » dans cette bordure basse.

Cette disposition permet le maintien vertical d'un module par rapport à l'autre par insertion de l'extrémité du « L » dans les encoches.

Selon un mode de réalisation, l'au moins une encoche de la traverse de la bordure haute coïncide avec l'au moins une partie en saillie de la traverse de la bordure basse.

Cette disposition permet un décalage latéral dans le montage des modules et permet donc de réaliser un montage aligné ou un montage en quinconce.

Selon un mode de réalisation, la traverse de la bordure haute comporte une partie formant un dégorgeoir de forme sensiblement parallélépipédique ouvert sur sa face supérieur, fermé latéralement et évacuant l'eau à travers l'au moins une encoche de la traverse de la bordure haute.

Cette disposition permet de contenir les eaux d'écoulement arrivant de l'interface de deux modules photovoltaïques adjacents supérieurs et de les déverser sur la surface du module photovoltaïque.

Selon un mode de réalisation, les traverses des bordures haute et basse permettent un montage en quinconce ou bien aligné de deux modules photovoltaïques adjacents disposés l'un au dessus de l'autre.

Cette disposition permet de choisir suivant la toiture si l'écoulement des eaux pluviales entre deux modules adjacents latéralement receuillies par des montants latéraux doit être réparti dans la traverse de la bordure haute et s'évacuer par les encoches de la traverse de la bordure haute, comme c'est le cas d'un montage en quinconce; ou uniquement s'évacuer par les montants latéraux, comme c'est le cas du montage aligné.

Selon un mode de réalisation, le module photovoltaïque comporte une surface d'exposition, une première bordure latérale, une seconde bordure latérale et la première bordure latérale comprend un premier montant et la seconde bordure latérale comprend un second montant de forme adaptée à celle du premier montant de manière à rendre sensiblement coplanaires les surfaces d'exposition des laminés de deux modules photovoltaïques adjacents latéralement.

Cette disposition permet de disposer de bons appuis pour les modules photovoltaïques supérieurs et d'éliminer toute ouverture entre un module inférieur et un module supérieur résultant de la différence de hauteur des points d'appui de la traverse de la bordure basse du module supérieur.

Selon un mode de réalisation, un des montants d'une des bordures latérales forme un conduit d'écoulement pour l'eau.

Cette disposition permet de réaliser l'étanchéité à l'interface de deux modules photovoltaïques adjacents latéralement.

Selon un mode de réalisation, le maintien du laminé par les différents montants et traverses est soit en support avec des montants et traverses avec une extrémité en forme de « L », soit en prise avec des montants et traverses avec une extrémité en forme de « U ».

Cette disposition de ne pas se restreindre à un mode de réalisation particulier, on préférera toutefois maintenir le laminé en prise avec des montants et traverses en forme de « U » dans des régions à fort vent, sans quoi le maintien des laminés par des montants et traverses en forme de « L » suffit et rend l'ensemble de la structure plus léger.

La présente invention a également pour objet un procédé de montage d'un ensemble de modules photovoltaïques selon l'invention comprenant les étapes de :
- disposition d'un premier module photovoltaïque inférieur,
- disposition d'un second module photovoltaïque adjacent latéralement au premier module photovoltaïque en déposant l'un sur l'autre les montants des bordures latérales adjacentes de ces deux modules photovoltaïques,
- placement d'un troisième module photovoltaïque au dessus des deux autres soit en l'alignant uniquement sur le premier module photovoltaïque, soit en quinconce avec les deux autres modules photovoltaïques:
- en inclinant verticalement la seconde traverse de la bordure basse de ce troisième module photovoltaïque,
- en alignant des parties en saillie disposées sur la seconde traverse de la bordure basse de ce troisième module photovoltaïque avec des encoches disposées sur la première traverse de la bordure haute du seul premier module photovoltaïque ou du premier module photovoltaïque conjointement au second module photovoltaïque,
- en ramenant le troisième module selon un plan sensiblement parallèle à celui des deux autres modules photovoltaïques afin de faire pénétrer les parties en saillie de la seconde traverse de la bordure basse de ce troisième module photovoltaïque dans les encoches du ou des premières traverses de la ou des bordures hautes du premier module photovoltaïque seul ou du premier module photovoltaïque conjointement au second module photovoltaïque.

D'autres caractéristiques et avantages de l'invention ressortiront de la description détaillée ci-après, prises en liaison avec des dessins qui illustrent, à titre d'exemple, les principes de l'invention.
La figure 1 montre plusieurs vues générales d'un module photovoltaïque.
La figure 2 montre une vue en perspective et une vue de profil d'une traverse destinée à être fixée sur la bordure haute d'un module photovoltaïque.
La figure 3 montre une vue en perspective et une vue de profil d'une traverse destinée à être fixée sur de la bordure basse d'un module photovoltaïque.
La figure 4 montre une vue en perspective et une vue de profil d'un montant destinée à être fixée sur de la bordure gauche d'un module photovoltaïque.
La figure 5 montre une vue en perspective et une vue de profil d'un montant destinée à être fixée sur de la bordure droite d'un module photovoltaïque.
La figure 6 montre une vue de profil de deux modules photovoltaïques adjacents disposés l'un au dessus de l'autre ainsi qu'une vue détaillée de profil de leur zone d'assemblage.
La figure 7 montre une vue en perspective et une vue détaillée de l'assemblage d'une traverse destinée à être fixée sur une bordure basse d'un module photovoltaïque sur une traverse destinée à être fixée sur une bordure haute d'un module photovoltaïque.
La figure 8 montre une vue en perspective ainsi qu'une vue de profil d'un montant destiné à être fixé sur une bordure droite d'un premier module photovoltaïque coopérant avec un montant destiné à être fixé sur une bordure gauche d'un second module photovoltaïque.
La figure 9 montre une première étape du procédé d'assemblage entre un module photovoltaïque supérieur disposé en quinconce au dessus de deux modules photovoltaïques inférieurs.
La figure 10 montre une deuxième étape du procédé d'assemblage entre un module photovoltaïque supérieur disposé en quinconce au dessus de deux modules photovoltaïques inférieurs.
La figure 11 montre une troisième étape du procédé d'assemblage entre un module photovoltaïque supérieur disposé en quinconce au dessus de deux modules photovoltaïques inférieurs.

Le repérage dans l'espace des différents éléments décrits ci-dessous à titre d'exemple, est ici donné par rapport à la situation de ces éléments tels qu'ils apparaissent sur les différentes figures.

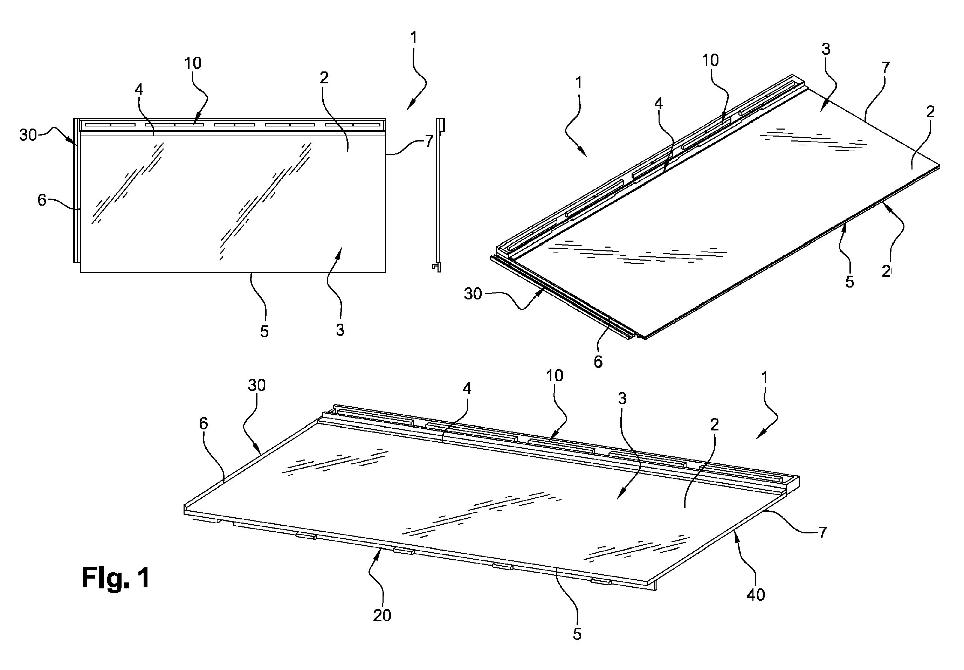

Comme le montre la figure 1, un module photovoltaïque 1 selon l'invention est composé d'un laminé 2 de couches de silicium créant une surface d'exposition 3 aux rayons du soleil. Ce module photovoltaïque 1 définie ainsi un bord haut 4, bas 5, gauche 6 et droit 7.

Sur le bord haut 4 du module photovoltaïque 1, il est fixé par collage une traverse haute 10.

Sur le bord bas 5 du module photovoltaïque 1, il est fixé par collage une traverse basse 20.

Sur le bord gauche 6 du module photovoltaïque 1, il est fixé par collage un montant gauche 30.

Sur le bord droit 7 du module photovoltaïque 1, il est fixé par collage un montant droit 40.

Les montants gauche 30 et droit 40 constituent des montants latéraux, et il importe peu qu'ils soient disposés sur le bord gauche ou droit du module photovoltaïque pourvu que tous les modules photovoltaïques constituant l'installation finale aient la même configuration.

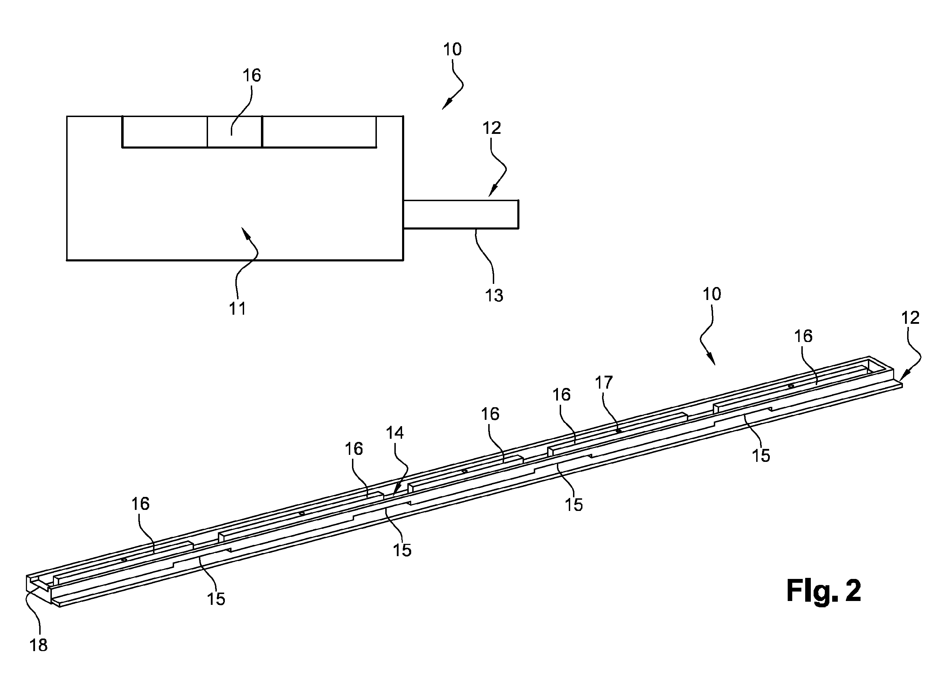

Comme détaillée à la figure 2, une traverse haute 10 destinée à être fixée à un bord haut 4 du module photovoltaïque 1 comprend un corps parallélépipédique 11 et une portion de fixation 12 du laminé 2 de section rectangulaire faisant saillie du corps 11 en direction du laminé 2. Cette portion 12 comprend une face de collage 13 du laminé 2 disposée sur la face inférieure de cette même portion de fixation 12.

Le corps 11 de la traverse haute 10 forme un dégorgeoir 14 ouvert sur sa face supérieur et comprenant des encoches 15 sur sa face basse dirigée en direction du laminé 2. Ces encoches 15, au nombre de quatre sur la figure 2 à titre d'exemple, ont une forme rectangulaire allongée et débouchent sur la face supérieure de la portion de fixation 12 du laminé 2. L'écart entre chaque encoches 15 adjacentes est sensiblement le même.

Dans le dégorgeoir 14, il est disposé des semelles 16 au nombre de cinq sur la figure 2 à titre d'exemple et selon l'axe médian principal du corps 11. Ces semelles 16 ont une forme parallélépipédique allongée selon cet axe médian et une largeur sensiblement identique à celle de la paroi arrière du dégorgeoir 14. Ces semelles présentent également une hauteur sensiblement identique à la hauteur de cette même paroi arrière du dégorgeoir 14, et comportent un perçage 17 agencé au centre de la surface haute de chaque semelle 16 et traversant la semelle jusqu'à atteindre la surface inférieure de la traverse haute 10. Ces perçages 17 font fonction de passage de vis (non illustré) servant à la fixation du module photovoltaïque 1 sur la structure du toit pour laquelle il est destiné.

Les semelles 16 servent donc à rehausser ces perçages 17 par rapport au fond du dégorgeoir 14 pour que l'eau pouvant circuler à l'intérieur du dégorgeoir 14 n'atteigne pas ces perçages 17, ce qui conduirait à une infiltration d'eau.

Le dégorgeoir 14 comprend également sur ces deux extrémités droite et gauche, des parois rabaissées 18 d'une hauteur inférieure à ces parois arrière, avant, ainsi qu'à la hauteur des semelles 16. La fonction de ces parois rabaissées 18 apparait plus bas dans le texte.

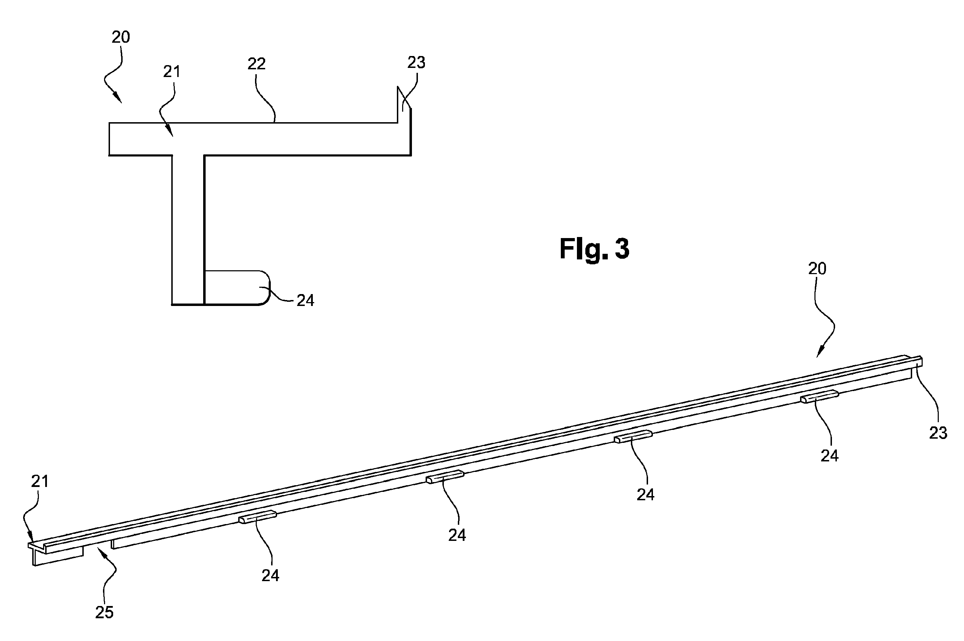

Comme détaillée à la figure 3, une traverse basse 20 destinée à être fixée à un bord bas 5 du module photovoltaïque 1 comprend un corps 21 avec un profil en forme de « T ».

La tête de ce « T » est rallongée vers le bas dans la direction opposée au laminé 2 engendrant ainsi une surface agrandie sur la tête du « T » et définissant une surface de collage 22 pour le laminé 2. Cette surface de collage 22 se termine sur son extrémité basse par une butée 23 contribuant au support du laminé 2. Cette butée 23 s'étend verticalement par rapport à la face de collage 22 du laminé 2 et est biseautée sur son arrête basse afin de faciliter l'écoulement de l'eau.

Sur l'extrémité de la face latérale du pied du « T » orienté vers le bas, il est disposé des parties en saillie 24. Ces parties en saillie 24 sont ici au nombre de quatre, ce qui correspond au même nombre d'encoches 15 de la traverse haute 10 décrite précédemment. Ces parties en saillie 24 sont donc destinées à être insérés au travers des encoches 15 disposées sur la traverse haute 10 d'un module photovoltaïque 1 inférieur. A cet effet, et pour faciliter leur insertion, les parties en saillie 24 sont arrondies sur leurs arrêtes vives.

Sur le corps du « T », proche de l'extrémité gauche de la traverse basse 20, il est disposé une encoche 25.

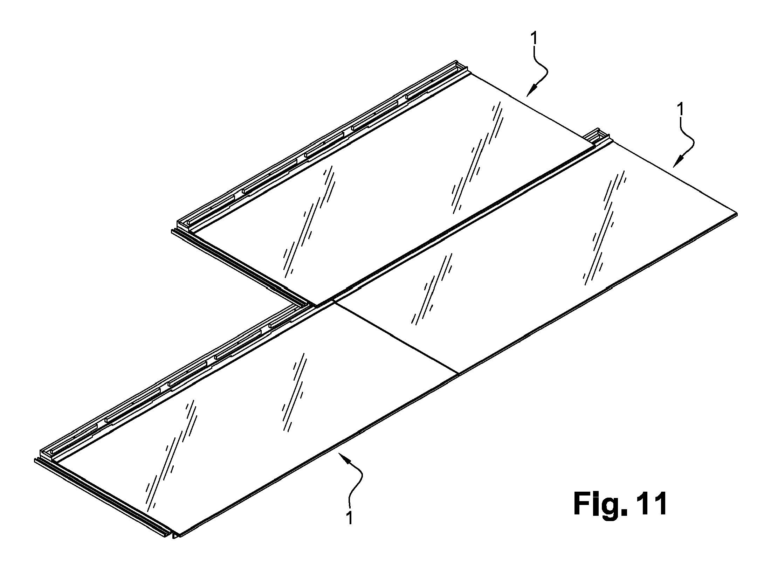

Cette encoche 25 sert à emjamber les parois rabaissées 18 de deux traverses hautes 10 de deux modules photovoltaïques 1 adjacents latéralement lorsque le montage des modules photovoltaïques 1 est réalisé en quinconce, c'est-à-dire avec des modules photovoltaïques supérieurs et inférieurs décalés en largeur comme cela est illustré en partie à la figure 11.

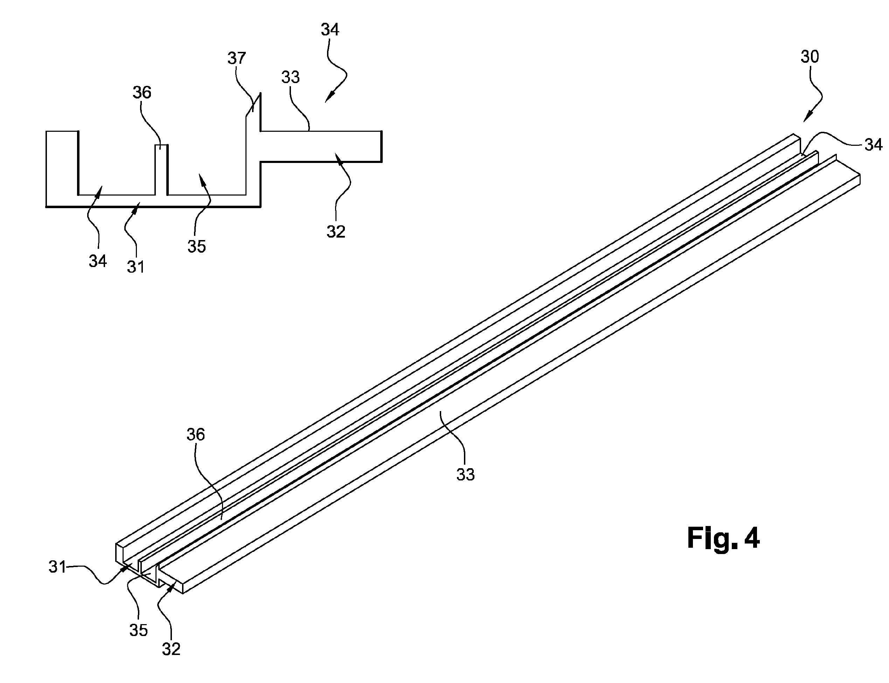

Comme détaillé à la figure 4, un montant gauche 30 destiné à être fixé à un bord gauche 6 du module photovoltaïque 1 comprend un corps 31 avec un profil en forme de double « U » adossés l'un à côté de l'autre définissant ainsi un premier conduit 34 situé à gauche d'un second conduit 35 sur toute la longueur du montant gauche 30 et ayant sensiblement la même largeur.

La paroi gauche du conduit 34 est plus épaisse que les autres parois. La paroi commune 36 des deux conduits 34 et 35 présente une hauteur plus basse que les autres parois. La fonction de cette caractéristique sera décrite plus bas dans le texte.

La paroi droite du conduit 35 présente une hauteur plus grande que la paroi gauche du conduit 34. L'extrémité de cette paroi est biseautée sur son arrête gauche afin de faciliter l'écoulement de l'eau.

Cette paroi comporte également sur sa face la plus à droite, une portion de fixation 32 du laminé 2 de section rectangulaire faisant saillie vers la droite du corps 31 en direction du laminé 2. Cette portion 32 est disposée sensiblement à une distance correspondant à l'épaisseur du laminé 2 en partant de l'extrémité haute de la paroi droite du conduit 35.

Cette portion 32 engendre une face de collage 33 du laminé 2 disposée sur la face supérieure de cette même portion de fixation 32. La portion de la paroi droite du conduit 35 se situant au dessus de la portion de fixation 32 sert de butée 37 au laminé 2.

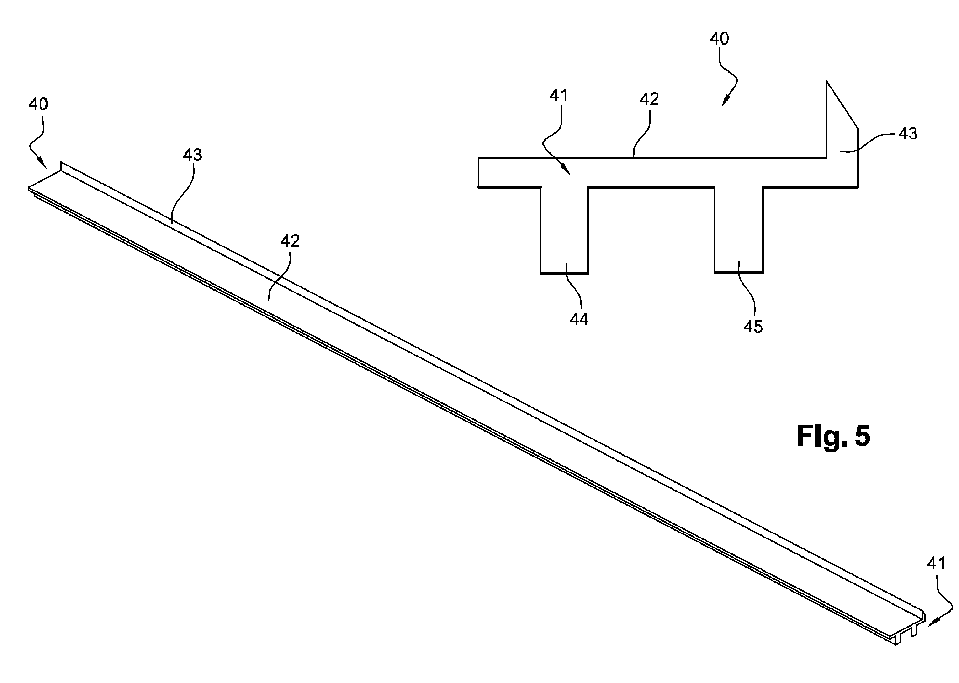

Comme détaillé à la figure 5, un montant gauche 40 destiné à être fixé à un bord droit 7 du module photovoltaïque 1 comprend un corps 41 avec un profil en forme de double « T » adossés l'un à l'autre par leur tête définissant ainsi un premier pied 44 et un deuxième pied 45. La surface engendrée sur la face supérieure des têtes des « T » par leur adossement définie une surface de collage 42 pour le laminé 2. Cette surface de collage 42 se termine sur son extrémité droite par une portion de section rectangulaire faisant saillie perpendiculairement à cette surface 42. Cette portion sert de butée 43 au laminé 2 et est biseautée sur son arrête droite afin de faciliter l'écoulement de l'eau.

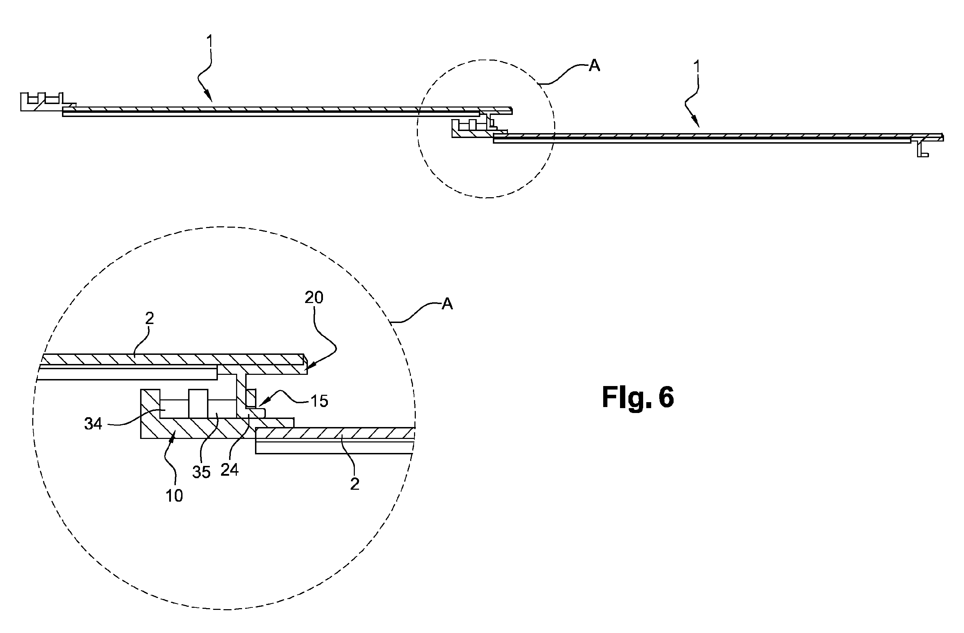

Les figures 6 à 11 illustrent les interactions entres les différents éléments décrits ci-dessus à titre d'exemple lors d'un montage de plusieurs modules photovoltaïques 1.

Comme il est montré à la figure 6, les parties en saillie 24 de la traverse basse 20 d'un module photovoltaïque 1 de niveau supérieur s'insèrent dans les encoches 15 de la traverse haute 10 d'un module photovoltaïque de niveau inférieur.

Une fois les parties en saillie 24 insérées dans les encoches 15, ces parties en saillie bloquent en translation verticale le mouvement d'un des modules par rapport à l'autre.

La paroi basse du dégorgeoir 14 de la traverse haute 10 du module photovoltaïque 1 inférieure assure le rôle de butée pour le pied du « T » du corps 21 de la traverse basse 20 du module photovoltaïque 1 supérieur, définissant ainsi une surface de recouvrement maximale du module photovoltaïque 1 inférieur par le module photovoltaïque 1 supérieur propice à réaliser l'étanchéité entre ces deux modules.

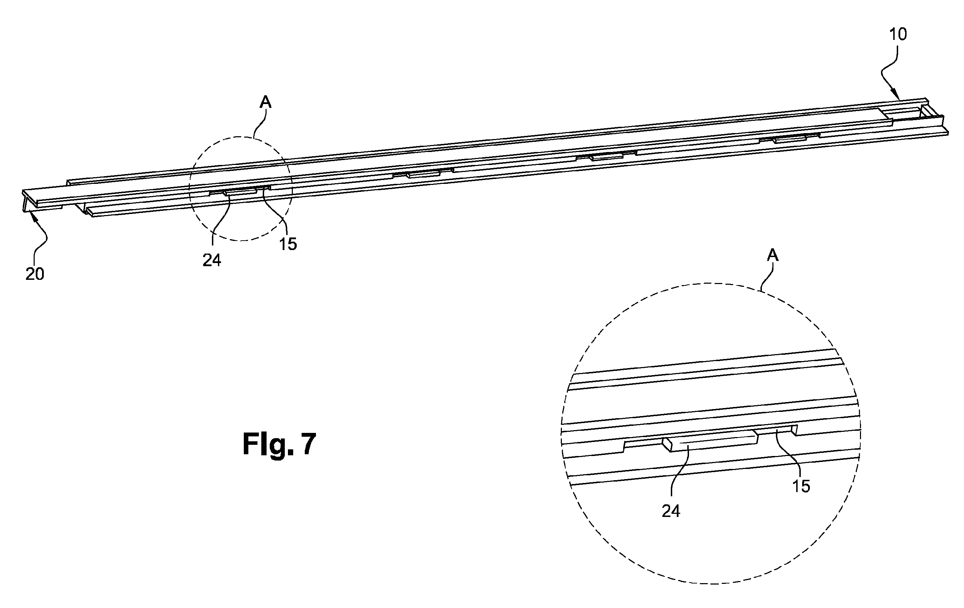

La figure 7 montre qu'il y a autant de parties en saillie 24 sur une traverse basse 20, qu'il y a d'encoches 15 sur une traverse haute 10. De plus, la largeur des encoches est prévue suffisament large d'une part pour permettre un jeu latéral des parties en saillie 24 dans les encoches 15, ce qui peut se révéler utile au montage mais surtout pour permettre l'évacuation de l'eau se déversant dans le dégorgeoir 14. Cette figure montre également l'encoche 25 d'extrémité gauche de la traverse basse 20 enjambant la paroi latérale d'extrémité gauche du dégorgeoir 14 de la traverse haute 10 dans un montage en quinconce.

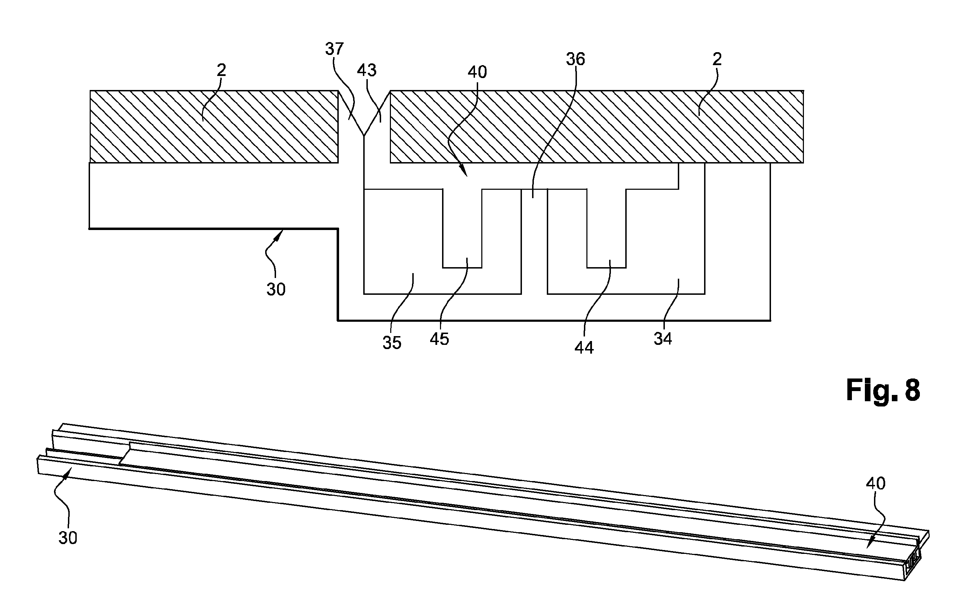

La figure 8 détaille l'agencement d'un montant droit 40 d'un premier module photovoltaïque 1 situé à gauche d'un second module photovoltaïque 1 équipé d'un montant gauche 30. Le premier pied 44 et le second pied 45 du montant droit 40 rentrent respectivement dans le premier conduit 34 et le second conduit 35 du montant gauche 30 sans en atteindre le fond limitant ainsi la translation latérale d'un module par rapport à un module adjacent latéralement sans toutefois l'annuler afin de conserver un jeu pouvant s'avérer utile lors du montage.

Le montant droit 40 s'appuie sur la paroi commune 36 des conduit 34 et 35 du montant gauche 30 et sont dimensionnés de telle sorte que que les surfaces d'exposition 3 des laminés supportés par les montants gauche 30 et droit 40 soient sensiblement sur un même plan.

Les arrêtes biseautés de la butée 37 du montant gauche 30 et de la butée du montant droit 40 se font face formant ainsi un entonnoir apte à récupérer l'eau recueilli à l'interface de deux modules adjacents latéralement. Cette eau s'écoule ensuite à l'intérieur du second conduit 35 du montant gauche 30 sans être gênée par le pied 45 du montant droit 40. Il suffit alors d'une légère pente latérale pour que cette eau soit déversée dans le dégorgeoir 14 d'une traverse 10 haute puis évacuée sur la surface d'un autre module photovoltaïque 1 inférieur au travers des encoches 15 de cette même traverse haute 10.

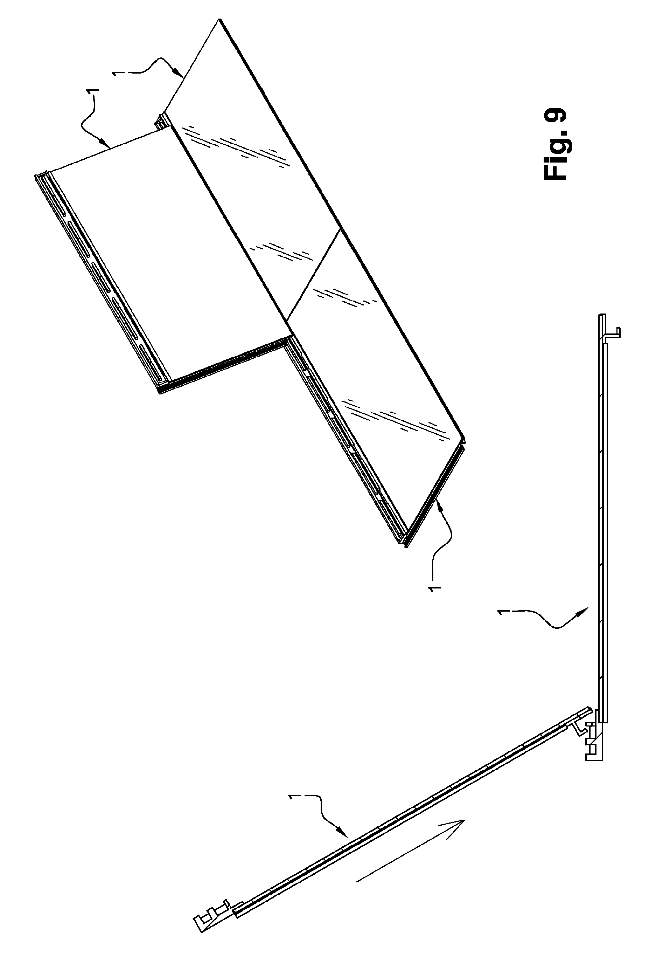

Les figures 9 à 11 illustrent les étapes du procédé de montage d'un module photovoltaïque 1 de niveau supérieur en quinconque avec deux modules photovoltaïques 1 adjacents latéralement de niveau inférieur et préalablement assemblés.

La première étape, illustrée à la figure 9, consiste à aligner les parties en saillie 24 de la traverse basse 20 fixée sur le bord bas 5 du module photovoltaïque à monter avec les encoches 15 de la traverse haute 10 fixée sur le bord haut 4 d'un module photovoltaïque 1 déjà monté et fixé à l'aide de vis traversant les perçages 17 des semelles 16.

La disposition des parties en saillie 24 et des encoches 15 en bordure de module photovoltaïque permet de visualiser leur alignement en début de montage et facilite donc grandement le montage d'un module supérieur sur un module adjacent inférieur.

Il oriente ensuite le module photovoltaïque 1 à monter suivant un angle d'environ 50° par rapport au plan des modules photovoltaïques 1 de niveau inférieur préalablement montés.

Selon un mode de réalisation où les parties en saillie 24 sont légèrement plus larges que la largeur du conduit 35, cette inclinaison est obligatoire afin de faire pénétrer l'extrémité des parties en saillie 24 dans les encoches 15 et de donner ainsi aux parties en saillie 24 une dimension raccourcie permettant au pied du corps 21 en forme de « T » d'accéder au fond du conduit 35.

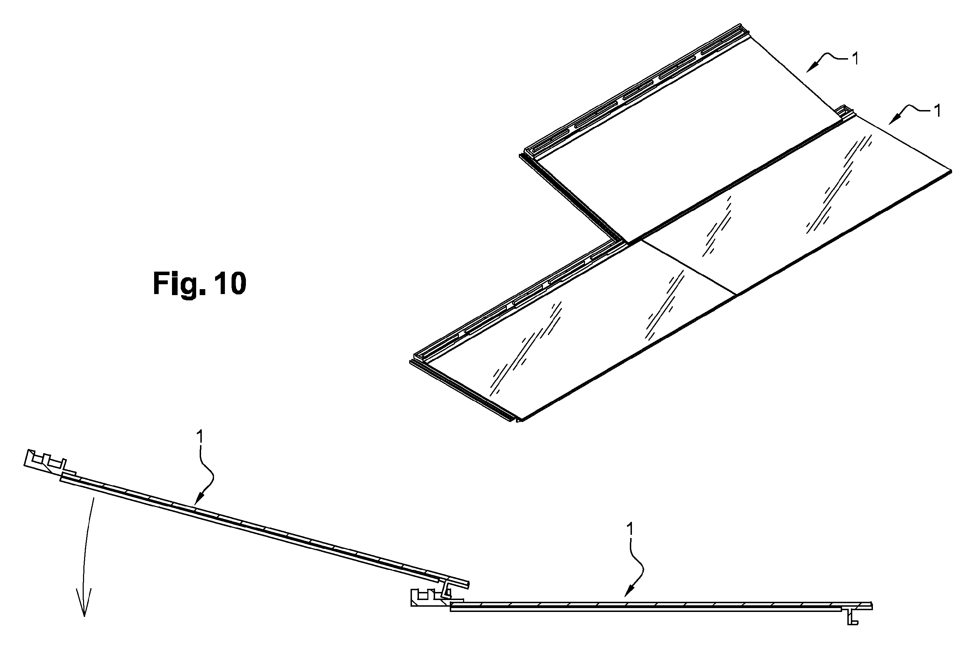

La seconde étape, illustrée à la figure 10, consiste à exécuter une rotation du module photovoltaïque 1 à monter autour de l'axe passant par les extrémités des parties en saillie 24 jusqu'à ce que le module photovoltaïque à installer soit proche de sa structure de support, en général la charpente du toit. Afin de permettre leur engagement total dans les encoches 15, l'installateur applique alors une légère translation du module photovoltaïque à installer vers le bas.

La troisième et dernière étape du montage, illustrée à la figure 11, consiste à fixer le module sur sa structure de support à l'aide de vis traversant les perçages 17 des semelles 16 de sa traverse haute 10.

Les bordure peuvent être réalisées en différentes matières notamment en polymères, polymères chargés, par exemple avec des fibres comme la fibre de verre, avec ou sans renforts mécaniques, par exemple métalliques.

Les bordure peuvent également être réalisées en matériaux inoxydables et résistants aux ultraviolets comme par exemple en aluminium ou en zinc.

Le montage d'un module photovoltaïque 1 adjacent latéralement reprend ces mêmes étapes, son montant droit 40 se retrouvera juste engagé dans le montant gauche 30 du module préalablement installé.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Module photovoltaïque (1) destiné à l'intégration en toiture comprenant un laminé (2) avec une bordure haute (4), une bordure basse (5),
**caractérisé en ce que**
la bordure haute (4) comprend une première traverse (10) et la bordure basse (5) comprend une seconde traverse (20) de forme adaptée à celle de la première traverse (10) de manière à ce que la première (10) et la seconde traverse (20) respectivement de la bordure haute (4) et basse (5) de deux modules photovoltaïques (1) adjacents disposés l'un au dessus de l'autre bloquent en translation le mouvement d'un de ces modules photovoltaïques (1) par rapport à l'autre selon une direction sensiblement transversale au plan du toit.

2. Module photovoltaïque (1) selon la revendication 1 dans lequel le laminé (2) et/ou la seconde traverse (20) de la bordure basse (5) d'un premier module photovoltaïque (1) disposé au dessus d'un second module photovoltaïque (1) adjacent au premier, recouvre partiellement le laminé (2) et/ou la première traverse (10) de la bordure haute (4) du second module photovoltaïque (1).

3. Module photovoltaïque (1) selon l'une des revendications 1 à 2 dans lequel la forme de la seconde traverse (20) de la bordure basse (5) est agencée pour être emboîtée avec la première traverse (10) d'une bordure haute(4).

4. Module photovoltaïque (1) selon la revendication 3 dans lequel l'emboîtement entre deux modules (1) adjacents nécessite un mouvement de rotation.

5. Module photovoltaïque (1) selon l'une des revendications 1 à 4 dans lequel la traverse (10) de la bordure haute (4) d'un premier module photovoltaïque (1) comporte au moins une encoche (15) et la traverse (20) de la bordure basse (5) de ce même premier module photovoltaïque (1) comporte au moins une partie en saillie (24), ces parties en saillie (24) étant destinées à pénétrer au moins partiellement au travers des encoches (15) de la traverse (10) de la bordure haute (4) d'un second module photovoltaïque (1) adjacent disposé en dessous du premier module photovoltaïque (1).

6. Module photovoltaïque (1) selon la revendication 5 dans lequel l'au moins une partie en saillie de la traverse de la bordure basse (5) forme un « L » dans cette bordure basse (5).

7. Module photovoltaïque (1) selon la revendication 6 dans lequel l'au moins une encoche (15) de la traverse (10) de la bordure haute (4) coïncide avec l'au moins une partie en saillie (24) de la traverse (20) de la bordure basse (5).

8. Module photovoltaïque (1) selon l'une des revendications 6 à 7 dans lequel la traverse (10) de la bordure haute (4) comporte une partie formant un dégorgeoir (14) de forme sensiblement parallélépipédique ouvert sur sa face supérieur, fermé latéralement et évacuant l'eau à travers l'au moins une encoche (15) de la traverse (10) de la bordure haute (4).

9. Module photovoltaïque (1) selon l'une des revendications 1 à 8 dans lequel les traverses (10, 20) des bordures haute (4) et basse (5) permettent un montage en quinconce ou bien aligné de deux modules photovoltaïques (1) adjacents disposés l'un au dessus de l'autre.

10. Module photovoltaïque (1) selon l'une des revendications 1 à 9 comportant une surface d'exposition (3), une première bordure latérale (6), une seconde bordure latérale (7) et dans lequel la première bordure latérale (6) comprend un premier montant (30) et la seconde bordure latérale (7) comprend un second montant (40) de forme adaptée à celle du premier montant (30) de manière à rendre sensiblement coplanaires les surfaces d'exposition (3) des laminés (2) de deux modules photovoltaïques (1) adjacents latéralement.

11. Module photovoltaïque (1) selon la revendication 10 dans lequel un des montant (30, 40) d'une des bordures latérales (6, 7) forme un conduit (35) d'écoulement pour l'eau.

12. Module photovoltaïque (1) selon l'une des revendications 1 à 11 dans lequel le maintien du laminé (2) par les différents montants (30, 40) et traverses (10, 20) est soit en support avec des montants (30, 40) et traverses (10, 20) avec une extrémité en forme de « L », soit en prise avec des montants (30, 40) et traverses (10, 20) avec une extrémité en forme de « U ».

13. Procédé de montage d'un ensemble de modules photovoltaïques (1) selon l'une des revendications 1 à 12 comprenant les étapes de :
- disposition d'un premier module photovoltaïque (1) inférieur,
- disposition d'un second module photovoltaïque (1) adjacent latéralement au premier module photovoltaïque (1) en déposant l'un sur l'autre les montants (30, 40) des bordures latérales (6, 7) adjacentes de ces deux modules photovoltaïques (1),
- placement d'un troisième module photovoltaïque (1) au dessus des deux autres soit en l'alignant uniquement sur le premier module photovoltaïque (1), soit en quinconce avec les deux autres modules photovoltaïques (1):
- en inclinant verticalement la seconde traverse (20) de la bordure basse (5) de ce troisième module photovoltaïque (1),
- en alignant des parties en saillie (24) disposées sur la seconde traverse (20) de la bordure basse (5) de ce troisième module photovoltaïque (1) avec des encoches (15) disposées sur la première traverse (10) de la bordure haute (4) du seul premier module photovoltaïque (1) ou du premier module photovoltaïque (1) conjointement au second module photovoltaïque (1),
- en ramenant le troisième module photovoltaïques (1) selon un plan sensiblement parallèle à celui des deux autres modules photovoltaïques (1) afin de faire pénétrer les parties en saillie (24) de la seconde traverse (20) de la bordure basse (5) de ce troisième module photovoltaïque (1) dans les encoches (15) du ou des premières traverses (10) de la ou des bordures hautes (4) du premier module photovoltaïque (1) seul ou du premier module photovoltaïque (1) conjointement au second module photovoltaïque (1).
